# EUROPEAN PATENT SPECIFICATION

(11) **EP 2 107 724 B1**
(45) Date of publication and mention of the grant of the patent: **23.06.2010**
(21) Application number: 08006267.2
(22) Date of filing: 31.03.2008
(51) Int. Cl.: H04L 12/46

(54) **Improved MAC address learning**
Verbessertes MAC-Adress-Lernen
Apprentissage amélioré d'adresse Mac

(43) Date of publication of application: 07.10.2009
(73) Proprietor: Alcatel Lucent, 75008 Paris (FR)
(72) Inventor: Schlenk, Ralph, 91054 Erlangen (DE)
(74) Representative: Schmidt, Werner Karl

(56) References cited:
- US-B1- 6 816 490
- IEEE: "IEEE Std 802.1D-2004, IEEE Standard for Local and metropolitan area networks - Media Access Control (MAC) Bridges" IEEE STD 802.1D-2004, XX, XX, 9 June 2004 (2004-06-09), pages 1-2,29, XP002353250

## Description

### Background of the Invention

The invention relates to a method for learning Media Access Control, MAC, addresses as well as to a computer program product for implementing the method. The invention further relates to a switch, in particular to an Ethernet switch, comprising: a processing unit for processing learning requests for learning MAC addresses of forward flows, and to a computer network comprising at least one such switch.

The increase in packet data traffic has led to a high popularity of Ethernet based networks, e.g. in access networks based on Virtual Private LAN Services (VPLS), as well as in metro and core networks. Moreover, Ethernet networks are nowadays not only based on the traditional wireline IEEE 802.3 technology, but also on wireless access like Bluetooth, Wireless LAN, and WiMAX.

Ethernet routing is done by backward learning first described by P. Baran, "On Distributed Communication Networks", IEEE Transactions on Communications Systems, Vol. CS-12, No. 1, 1964. In the routing algorithm, unknown destination packets are flooded over the entire network, see also IEEE 802.1 D-2004, Media Access Control (MAC) Bridges, Clause 7, June 2004. Because of this simple broadcast / self-learning routing architecture, Ethernet is dependent on a loop-free network topology, which is ensured by the Spanning Tree Protocol, see Clause 17 of the above-mentioned document. In case of a Spanning Tree re-configuration (e.g. due to a network failure), parts of the MAC address tables in the affected nodes / switches have to be flushed in order to allow for fast relearning of the forwarding databases (cf. Clause 17.11).

The MAC address table re-learning is a scenario which is similar to adding a new node with empty MAC address table to a network: Dependent on the size of the network, hundreds of thousands of new MAC addresses may have to be learned. This applies in particular to large next-generation metro and core networks, which will in many cases be implemented as pure Ethernet or VPLS / H-VPLS (Hierarchical VPLS) networks, see e.g. L. Andersson and E. Rosen, "Framework for Layer 2 Virtual Private Networks (L2VPNs)", RFC 4664, September 2006, stating that MAC address learning and forwarding will be done based on a potentially very high number of customer MAC addresses.

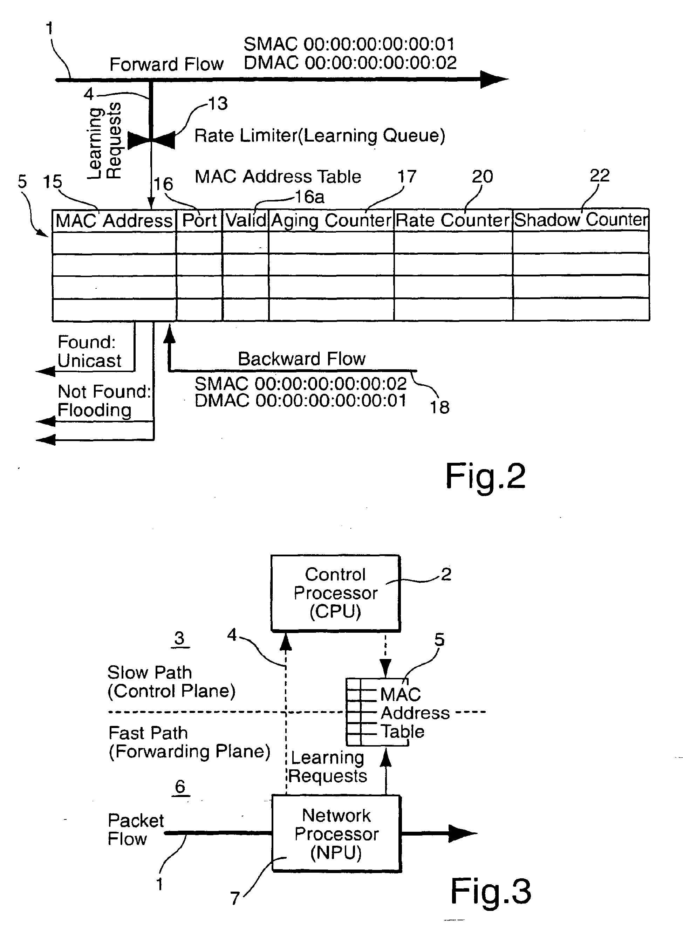

During a typical learning process for MAC addresses of a forward flow **1** shown in **Fig. 3**, learning requests **4** are submitted to a learning queue (not shown) before they are processed by an independent learning process. As MAC address learning is a complex task that includes table limit checks, learning request distribution (dependent on actual implementation), collision resolution (dependent on actual implementation) etc., the learning process in current generation as well as in most of the next generation equipment is implemented in a control processor (CPU) **2** of a Control Plane **3** (upper part of Fig. 3) to which the learning requests **4** from the forward flow 1 are transferred (see the dashed arrow). MAC addresses which have been learned in the learning process are then added to a MAC address table **5,** together with the corresponding port of the switch to which they are attributed. Alternatively, in case that a MAC address entry is already present in the MAC address table, but no port is attributed to it due to MAC address flushing, a new port learnt in the learning process will be attributed to that MAC address entry. Also, a "refresh" request for updating an ageing counter for existing entries in the MAC address table may be generated by the forward flows, such "refresh" requests not competing against the learning requests as described herein.

In the Control Plane 3, complex packet processing tasks may be performed - but only at a much lower bandwidth as compared to a high-bandwidth Forwarding Plane 6 represented in the lower part of Fig. 3. Nevertheless, even if the learning process is implemented in the Forwarding Plane 6 (see the solid arrow) using e.g. a Network Processor (NPU) 7 as is done in some advanced products, the bandwidth of the learning process under worst-case conditions is still orders of magnitudes smaller than the learning request bandwidth, as a single 10 Gigabit Ethernet port may generate more than 16 million learning requests per second.

If packets are not learned for one direction, flooding will occur in the opposite direction. Consequently, in case of a spanning tree re-configuration, flooding may affect large parts of the network for a certain time (typically until finally all addresses have been learned), a scenario which is also called Broadcast Storm. The bad thing about excessive broadcasting is that it blocks traffic on low capacity links. In other words, excessive flooding limits the performance and therefore increases the costs of Ethernet networks.

If the Ethernet routing architecture as standardized in IEEE 802. 1D-2004 is taken for granted, the root cause of the problem is the limited learning process bandwidth in Ethernet equipment. For Control Plane based learning, the available bandwidth is usually limited by the Control Processor (CPU) 2, which is typically only able to process less than 10k of learning requests per second. A possible solution is to increase that bandwidth by performing the learning in the Forwarding Plane 6 instead. However, usually only a fraction of the required worst-case learning bandwidth is reserved for that purpose (typical values for a 10 Gigabit Ethernet port are 100k to 1 M learning requests per second): From an economic standpoint it makes much more sense to use that bandwidth for forwarding traffic. Thus, learning in the Forwarding Plane 6 can only mitigate the problem but cannot solve it. Also, learning in the Forwarding Plane 6 is expensive as it requires additional hardware, thus not permitting to upgrade existing equipment where only software changes are allowed.

Document US 6 816 490 discloses a learning technique in a bridge for a local area network where learning operation is performed only in response to selected ones of the data packets.

### Object of the Invention

It is the object of the invention to provide: a method, a computer program for implementing the method, a switch and a network comprising at least one such switch, all of which allow to reduce flooding of packets during a network setup or re-configuration, respectively.

### Summary of the Invention

This object is achieved by a method as described above, comprising: attributing priorities to learning requests for learning MAC addresses of forward flows in dependence of flow rates of corresponding backward flows, higher priorities being attributed to learning requests of forward flows with corresponding backward flows having higher flow rates; and scheduling the processing of the learning requests in dependence of the attributed priorities.

In the context of the present invention, the term "forward flow" refers to a flow of packets having the same source MAC address and the same destination MAC address, and when being received in one of the ports of the switch, generates learning requests for learning its source MAC address. A backward flow has the source MAC address of the forward flow as its destination MAC address and the destination MAC address of the forward flow as its source MAC address. For the backward flow, an analogous learning process as for the forward flow is performed on another port of the switch.

In real-world traffic scenarios, it can be observed that not all learning requests are equally relevant. Traffic flows are often asymmetric, i.e. one direction has a much higher bandwidth than the opposite one. This means that there can be a lot of learning requests with no corresponding traffic in the other direction. These learning requests are not as important as the ones which have an immediate effect on traffic in the backward direction, as only in the latter case, flooding of the backward traffic may occur. Therefore, according to the invention, priorities are attributed to the learning requests, i.e. the learning requests are ranked according to their ability to reduce flooding, learning requests with a higher ranking / priority being processed first, as statistically, there is no performance penalty if the less relevant learning information is processed later.

In fact, there are two possibilities to handle the less important learning requests: Either they are put in special, low priority learning queues, from where the CPU or the hardware-based learning process can process them according a scheduling algorithm, or the less important learning requests will be discarded (a method that could be used in older equipment which does not provide additional queues). Discarding is a valid strategy, as in the solution of the state of the art, arbitrary requests are also discarded after an overflow of the queue. Statistically, the information is not lost as frames / packets with the same source address will be sent repeatedly.

In a preferred variant, the method further comprises: attributing user-defined priorities to the learning requests of the forward flows, the user-defined priorities preferably being chosen from a pre-defined set of discrete values. When provisioning a traffic flow the operator can additionally specify the "learning priority" for this flow, taking into account the bandwidth and other traffic parameters of the backward flow(s). Such a user-defined ranking operates on "classification" flows such as VLAN flows and requires the operator to specify information about the flow.

Preferably, the method further comprises: for automatically attributing priorities to the learning requests, determining the flow rate of at least one corresponding backward flow, preferably by counting the number of packets of the corresponding backward flow for which a destination MAC address lookup is performed. Automatic ranking is more convenient for the operator as compared to user-defined ranking, because the operator does not have to specify information that may not known to him/her. Moreover, automatic ranking operates on micro-flow granularity (MAC flows), whereas user-defined ranking operates on "classification" flows. The person skilled in the art will appreciate that the user-defined ranking and the automatic ranking may be advantageously combined, the automatic ranking e.g. being preformed when no information about the ranking is available from the operator.

In a highly preferred variant, the MAC address of the forward flow is linked to a rate counter for storing a current value of the number of counted packets of the corresponding backward flow. Each time an address lookup is done by the backward flow the corresponding rate counter is increased. Similar to aging counters, rate counters may be part of the MAC address table or linked to it by a 1:1 relationship. In order to save memory space, rate counters can be chosen from a pool of counters (n:m relationship) if not enough resources are available in the system, it not being possible to measure all the backward flows in this case. The forward flows for which the flow rate of the corresponding backward flows is not measured may then be processed with the highest priority. Like ageing counters, rate counters may also saturate when they have reached a maximum value. For the use of rate counters, it is mandatory not to delete the MAC address entries in the MAC address table when flushing the MAC address table e.g. during a protection switch. Instead, MAC address entries which are no longer valid after a change of the network topology will be invalidated, e.g. by setting a validation flag in the MAC address table to "invalid", such that forward flows will no longer be routed to the port which is linked to the invalid MAC address entry in the MAC address table.

In a preferred improvement, before re-counting of the number of packets, the current value of the rate counter is transferred to a register, the re-counting being preferably performed when updating ageing counters of the MAC address table. The rate measurement may be performed repeatedly, preferably in periodic intervals, the rate which is measured during a pre-defined measuring time interval being used for a subsequent learning request ranking. As the current value of the rate counter is usually set to zero at the beginning of the measurement, such a ranking will be inaccurate if - by coincidence - it happens during the measurement, such that a register (shadow counter) is introduced which holds the previously measured value during the measurement, it being possible to use the value of the shadow counter when performing a ranking of learning requests during the measurement. In particular, it may be of advantage to determine the maximum value of the rate counters of the MAC address table in order to perform a rate counter normalization.

In a highly preferred variant, learning requests having a priority below a pre-defined threshold priority are discarded. In such a way, the amount of learning requests can be limited directly. As has already been stated above, the information about the learning requests is not lost as frames with the same source address are typically sent repeatedly.

A second aspect of the invention is implemented in a switch of the type described above, further comprising: a learning request ranking unit for attributing priorities to the learning requests of the forward flows in dependence of flow rates of corresponding backward flows, higher priorities being attributed to learning requests of forward flows with corresponding backward flows having higher flow rates, and a scheduling unit for scheduling the processing of the learning requests in the processing unit in dependence of the attributed priorities. A switch of the type described above allows performing selective address learning of MAC addresses based on the flow rates of the backward traffic.

In a preferred embodiment, the switch further comprises: a flow rate determining unit for determining a flow rate of at least one corresponding backward flow, preferably by counting the number of packets of the backward flow for which a MAC address lookup is performed. In such a way, an automatic ranking of the learning requests may be performed in dependence of the backward traffic flow. If no or only few packets arrive during a predefined time, flooding these packets is likely to be less detrimental than flooding packets with a high frame rate. Preferably, the automatic ranking may be combined with the user-defied ranking which has been described above.

In another preferred embodiment, the switch further comprises a storage unit for storing a MAC address table, at least one stored MAC address of a forward flow being linked to a rate counter for storing a current value of the number of counted packets of the corresponding backward flow. The values of the rate counter may be divided into a plurality of ranges, each of the ranges being mapped to one of a plurality of priorities for the MAC address learning requests.

In a highly preferred embodiment, the processing unit, the learning request ranking unit and the scheduling unit are implemented in a network processor. In such a way, the MAC address learning can be performed in the forwarding plane, such that a high bandwidth can be provided for the learning process.

A third aspect of the invention is implemented in a computer network, in particular in an Ethernet network, comprising at least one switch of the type described above. In such a network, unnecessary flooding of traffic during a transient state (network reconfiguration) can be avoided.

A fourth aspect of the invention is implemented in a computer program product comprising code means for implementing all the steps of the method as described above. The code means of the computer program product may be implemented typically in hardware (e.g. an ASIC chip) without the need for a software program. However, as many technical products, parts or the whole code can also be implemented as software, the software implementation being advantageous in case that the method has to be implemented on existing hardware.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: a schematic diagram of an embodiment of an Ethernet switch according to the invention which is part of an Ethernet network according to the invention,
- **Fig. 2**: a schematic diagram of the relation of the MAC learning process with respect to forward and backward flows, and
- **Fig. 3**: a schematic diagram of MAC address learning in the slow and the fast path.

### Detailed Description of Preferred Embodiments

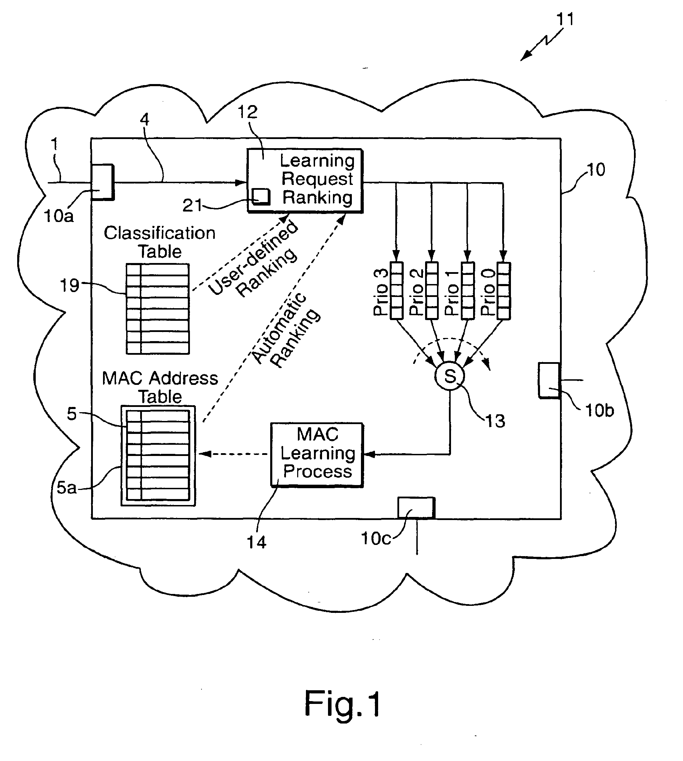

In **Fig. 1****,** a switch **10** for routing data packets between three ports **10a** to **10c** is shown, the switch 10 being part of an Ethernet network **11** the further components of which are not represented in Fig. 1 for the sake of simplicity. The switch 10 comprises a learning request ranking unit **12,** a scheduling unit **13** and a processing unit **14,** the operation of which will be described in the following with reference to **Fig. 2****.**

**Fig. 2** gives an overview of a routing process for routing packets between the ports 10a to 10c of the switch 10. In the routing process, a forward flow 1 is received in the first port 10a of the switch 10, the forward flow 1 having a source MAC address (e.g. 00:00:00:00:00:01) and a destination MAC address (e.g. 00:00:00:00:00:02). The destination MAC address of the forward flow 1 is searched in a MAC address table 5 by comparing the destination MAC address with the entries of a MAC address field **15** of the MAC address table 5. In case that the destination MAC address is found, the packet of the forward flow 1 is transmitted via only one of the further ports 10a, 10b of the switch 10 which is defined in the corresponding entry of a port field **16** of the MAC address table 5. For each entry in the MAC address field 15, an ageing counter **17** is provided, the ageing counter 17 being increased each time an address look-up of the corresponding MAC address entry by the forward flow 1 is performed.

In case that no entry for the source MAC address of the forward flow 1 or no port corresponding to that address can be found in the MAC address table 5, a learning request 4 for learning the source MAC address of the forward flow 1 is generated, the MAC address learning being performed by adding the source MAC address to the MAC address table 5 together with the number of the source port 10a, i.e. the port at which the forward flow 1 has been received. In such a way, a backward flow **18** (a flow with inverse source and destination addresses) being received e.g. in port 10b of the switch 10 can find its destination MAC address (being identical to the source MAC address of the forward flow 1) in the MAC address table 5, thus allowing the backward flow 18 to be routed only via the port 10a corresponding to the entry of the destination MAC address of the backward flow 18 in the MAC address table 5. However, in case that the destination MAC address of the backward flow 18 cannot be found in the MAC address table 5, packets of the backward flow 18 are transmitted via each of the two ports 10a, 10c, such that flooding occurs.

As traffic flows are often asymmetric, the forward flows 1 received in port 10a may have a much higher bandwidth than the corresponding backward flows 18, it being possible that a lot of learning requests 4 for learning MAC addresses of the forward flow 1 have no corresponding traffic in the backward direction, such that no flooding in the backward direction may occur. Consequently, these learning requests are not as important as the ones which have an immediate effect on traffic in the backward direction, such that ranking of the learning requests 4 according to the flow rate of the corresponding backward flows 18 is of advantage, as will be described in the following with reference to Fig. 1 for the port 10a of the switch 10.

The learning requests 4 generated by the forward flow 1 in the port 10a are provided to the learning request ranking unit 12 for attributing priorities to the learning requests 4. The ranking may be performed either as a user-defined ranking or as an automatic ranking, both of which are performed in the learning request ranking unit 12, in a way described in the following.

For performing the user-defined ranking, when provisioning a traffic flow, the operator can additionally specify the "learning priority" for this flow, taking into account the bandwidth and other traffic parameters of the backward flow(s). Example: For four different learning priorities, the possible command line interface parameter mac-learning enable|disable has to be changed to mac-learning enable|enable-auto|enable-pri3|enable-pri2|enable-pril|enable-pri0|disable (enable is for backward compatible MAC address learning, enable-auto is for the automatic ranking method which will be described below). Once the user-defined ranking **Prio0** to **Prio3** of a forward flow 1 is specified, the specification is stored in a classification table **19**, the learning request ranking unit 12 using the classification table 19 for attributing one of the four priorities selected by the operator to the forward flows 1 received in the port 10a of the switch 10. The person skilled in the art will appreciate that the total number of learning priorities used for the MAC learning is not limited to four, but may vary depending on the type of application.

In case that no information from the operator is available, automatic ranking is performed, which is more convenient for the operator because he /she does not have to specify information that may not be known to him/her. Moreover, automatic ranking operates on micro-flow granularity (MAC flows), whereas user-defined ranking operates on "classification" flows (e.g. VLAN flows). The key to automatic ranking is measuring the packet rate(s) of the backward flow(s) 18 (cf. Fig. 2), as if no or only few packets arrive during a predefined time interval, flooding these packets is likely to be less detrimental than flooding packets arriving with a higher frame rate.

In order to save precious system resources and to allow for integration into older systems, the measurement of the backward flow rates can be done by using a rate counter field **20** in the MAC address table 5 of Fig. 2. In such a way, the implementation of the flow rate measurement can be closely linked to the rest of the MAC address learning architecture. Each time an address lookup is done by the backward flow 18, the current value of the corresponding rate counter 20 is increased by a flow rate determining unit **21** being integrated into the learning request ranking unit 20. Similar to ageing counters 17, rate counters 20 may be part of the MAC address table 5 or linked to it by a 1:1 relationship. In order to save memory space, alternatively, rate counters 20 can be chosen from a pool of counters (in an n:m relationship), it not being possible to measure all of the backward flows in this case. Like the values of the ageing counters 17, the current values of the rate counters 20 saturate when they have reached a maximum value.

Several options exist for implementing the rate counters 20. Typically, during the initial startup of the system, the highest priority is attributed to each of the forwarding flows for ensuring that the maximum number of MAC addresses can be learned. When a re-routing of traffic occurs during the operation of the system, e.g. in case of a spanning tree protection switch, relevant parts of the MAC address table 5 may be flushed as required by the IEEE 802.1 D-2004 standard. Preferably, flushing will be confined to selected ports, i.e. only the entries of the MAC address table 5 corresponding to those ports will be flushed. A flushed entry will be marked as invalid in a validation flag field **16a** of the MAC address table 5, will not be used for the routing of the forward flows 1 any more and may be overwritten in case of an overflow of the MAC address table 5. Nevertheless, as long as the invalid entry is present in the MAC address table 5, the rate counter 20 of the invalid entry will still be increased each time a corresponding backward flow 18 performs a MAC address look-up. This is possible as traffic is usually routed through the switch 10 even after flushing of its MAC address entries. When the MAC address learning process has learnt the new port to which forwarding flows 1 of the invalid MAC address entry have to be routed after the flushing, the corresponding flag in the validation field 16a will be set to "valid" again and the forward flows 1 will be subsequently routed to the new port.

Usually, rate measurement is performed repeatedly, in general in periodic intervals, and the measured flow rate is used for subsequent learning request rankings. However, a ranking will be inaccurate if - by coincidence - it happens during a measurement. Therefore, so-called shadow rate counters 22 are introduced in the MAC address table 5, serving as a register which holds the previously measured rate until the new one is available, so that the ranking can be performed also during a measurement, the ranking being based on the shadow rate counters 22 in this case.

A possible ranking specification could look like this:

| **Value of packet rate counter** | **Learning rank** |
|---|---|
| 0 - 100 | 0 (lowest) |
| 101 -1,000 | 1 |
| 1,001 - 10,000 | 2 |
| 10,001 - | 3 (highest) |

By mapping the values of the rate counter 20 to four priorities, the automatic ranking is compatible with the user-defined ranking described above. The scheduling unit 13 uses different learning queues for the different priorities Prio0 to Prio3 and thus provides the ranked learning requests to the processing unit 14 in an order which is dependent on their priority. In particular, the scheduling unit 14 may drop those of the learning requests which have been attributed the lowest priority (Prio0). The person skilled in the art will appreciate that an analogous learning process is be provided for the other ports 10b, 10c of the switch 10 as well.

The hardware resources required for automatic ranking of learning requests 4 described above are relatively low: Basically, only one packet rate counter 20 per micro-flow is required that has to be incremented by the backward flow 18 and that has to be read by the learning flow, respectively by the flow rate determining unit 21. Ageing counters 17 and rate counters 20 as well as shadow counters 22 may be implemented at consecutive memory locations of a storage unit **5a** for the MAC address table 5 in order to save RAM accesses. Systems are usually designed with some headroom to allow for such feature enhancements. For performing MAC address learning with a high bandwidth, the learning request ranking unit 12, the scheduling unit 13 and the processing unit 14 may be implemented in the network processor 7 shown in Fig. 3.

In summary, in the way described above, reduction of the flooding of traffic in Ethernet networks may be performed. By limiting the number of learning requests, the bandwidth of the learning process is also limited, thus increasing the network performance and scalability. Moreover, there is a considerable cost reduction due to the possibility to increase broadcast domains. Also, the user-defined ranking method gives the operator better control over the network, and, finally, the method proposed above may be realized on existing hardware (i.e. as a software upgrade only), although typically the units described above may be implemented in an ASIC or in other suitable hardware components.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the scope of the invention, as defined by the appended claims, and equivalents thereof.

## Claims

1. Method for learning Media Access Control, MAC, addresses, comprising:
attributing priorities (Prio0 to Prio3) to learning requests (4) for learning MAC addresses of forward flows (1) in dependence of flow rates of corresponding backward flows (18), higher priorities (Prio0 to Prio3) being attributed to learning requests (4) of forward flows (1) with corresponding backward flows (18) having higher flow rates, and scheduling the processing of the learning requests (4) in dependence of the attributed priorities (Prio0 to Prio3).

2. Method according to claim 1, further comprising: attributing user-defined priorities (Prio0 to Prio3) to the learning requests (4) of the forward flows (1), the user-defined priorities (Prio0 to Prio3) preferably being chosen from a pre-defined set of discrete values.

3. Method according to claim 1, further comprising: for automatically attributing priorities (Prio0 to Prio3) to the learning requests (4), determining the flow rate of at least one corresponding backward flow (18), preferably by counting the number of packets of the backward flow (18) for which a MAC address lookup is performed.

4. Method according to claim 3, wherein the MAC address field (15) of the forward flow (1) is linked to a rate counter (20) for storing a current value of the number of counted packets of the corresponding backward flow (18).

5. Method according to claim 4, wherein before re-counting of the number of packets, the current value of the rate counter (20) is transferred to a register (22), the re-counting being preferably performed when updating ageing counters (17) of the MAC address table (5).

6. Method according to claim 1, wherein learning requests (4) having a priority (Prio0) below a pre-defined threshold priority (Prio1) are discarded.

7. Switch, in particular Ethernet switch (10), comprising:
a processing unit (14) for processing learning requests for learning Media Access Control, MAC, addresses (SMAC) of forward flows (1), **characterized by**
a learning request ranking unit (12) for attributing priorities (Prio0 to Prio3) to the learning requests (4) of the forward flows (1) in dependence of flow rates of corresponding backward flows (18), higher priorities (Prio0 to Prio3) being attributed to learning requests (4) of forward flows (1) with corresponding backward flows (18) having higher flow rates, and a scheduling unit (13) for scheduling the processing of the learning requests (4) in the processing unit (14) in dependence of the attributed priorities (Prio0 to Prio3).

8. Switch according to claim 7, further comprising:
a flow rate determining unit (21) for determining a flow rate of at least one corresponding backward flow (18), preferably by counting the number of packets of the backward flow (18) for which a MAC address lookup is performed.

9. Switch according to claim 8, further comprising a storage unit (5a) for storing a MAC address table (5), at least one stored MAC address of a forward flow (1) being linked to a rate counter (20) for storing a current value of the number of counted packets of the corresponding backward flow (18).

10. Switch according to claim 7, wherein the processing unit (14), the learning request ranking unit (12) and the scheduling unit (13) are implemented in a network processor (7).

11. Computer network, in particular Ethernet network (11), comprising at least one switch (10) according to claim 7.

12. Computer program product comprising code means for implementing all the steps of the method according to claim 1.

## Patentansprüche

1. Verfahren zum Lernen von Medienzugangssteuerungs-, MAC-Adressen, umfassend:
Zuweisen von Prioritäten (Prio0 bis Prio3) an Lernanforderungen (4) zum Lernen von MAC-Adressen von vorwärtsgerichteten Strömen (1) in Abhängigkeit von den Durchsatzraten entsprechender rückwärtsgerichteter Ströme (18), wobei den Lernanforderungen (4) von vorvuärtsgerichteten Strömen (1), deren entsprechende rückwärtsgerichtete Ströme (18) höhere Durchsatzraten aufweisen, höhere Prioritäten (Prio0 bis Prio3) zugewiesen werden, und Planen der Verarbeitung der Lernanforderungen (4) gemäß den zugewiesenen Prioritäten (Prio0 bis Prio3).

2. Verfahren nach Anspruch 1, weiterhin umfassend: Zuweisen von benutzerdefinierten Prioritäten (Prio0 bis Prio3) an die Lernanforderungen (4) der vorwärtsgerichteten Ströme (1), wobei die benutzerdefinierten Prioritäten (Prio0 bis Prio3) vorzugsweise aus einem vordefinierten Satz von diskreten Werten gewählt werden.

3. Verfahren nach Anspruch 1, weiterhin umfassend: Für das automatische Zuweisen von Prioritäten (Prio0 bis Prio3) an die Lernanforderungen (4), Ermitteln der Durchsatzrate mindestens eines entsprechenden rückwärtsgerichteten Stroms (18), vorzugsweise durch Zählen der Anzahl von Paketen des rückwärtsgerichteten Stroms (18), für welche eine MAC-Adress-Suche durchgeführt wird.

4. Verfahren nach Anspruch 3, wobei das MAC-Adressfeld (15) des vorwärtsgerichteten Stroms (1) mit einem Ratenzähler (20) verbunden ist, um einen momentanen Wert der Anzahl von gezählten Paketen des entsprechenden rückwärtsgerichteten Stroms (18) zu speichern.

5. Verfahren nach Anspruch 4, wobei, vor dem Nachzählen der Anzahl von Paketen, der momentane Wert des Ratenzählers (20) an ein Register (22) übermittelt wird, wobei das Nachzählen vorzugsweise während der Aktualisierung der Alterungszähler (17) der MAC-Adresstabelle (5) ausgeführt wird.

6. Verfahren nach Anspruch 1, wobei Lernanforderungen (4) mit einer unter einer vordefinierten Grenzpriorität (Prio1) liegenden Priorität (PrioO) verworfen werden.

7. Schalter, insbesondere ein Ethernet-Schalter (10), umfassend:
Eine Verarbeitungseinheit (14) zum Verarbeiten von Lernanforderungen für das Lernen von Medienzugangssteuerungs-, MAC-Adressen (SMAC) von vorwärtsgerichteten Strömen (1), **gekennzeichnet durch**:
Eine Lernanforderungs-Rangzuweisungseinheit (12) zum Zuweisen von Prioritäten (Prio0 bis Prio3) an die Lernanforderungen (4) der vorwärtsgerichteten Ströme (1) in Abhängigkeit von Durchsatzraten der entsprechenden rückwärtsgerichteten Ströme (18), wobei den Lernanforderungen (4) von vorwärtsgerichteten Strömen (1), deren entsprechende rückwärtsgerichtete Ströme (18) höhere Durchsatzraten aufweisen,
höhere Prioritäten (Prio0 bis Prio3) zugewiesen werden, und eine Planungseinheit (13) für das Planen der Verarbeitung der Lernanforderungen (4) in der Verarbeitungseinheit (14) gemäß den zugewiesenen Prioritäten (Prio0 bis Prio3).

8. Schalter nach Anspruch 7, weiterhin umfassend:
Eine Durchsatzratenermittlungseinheit (21) zum Ermitteln einer Durchsatzrate mindestens eines entsprechenden rückwärtsgerichteten Stroms (18), vorzugsweise durch Zählen der Anzahl von Paketen des rückwärtsgerichteten Stroms (18), für welche eine MAC-Adress-Suche durchgeführt wird.

9. Schalter nach Anspruch 8, weiterhin umfassend eine Speichereinheit (5a) zum Speichern einer MAC-Adresstabelle (5), wobei mindestens eine gespeicherte MAC-Adresse eines vorwärtsgerichteten Stroms (1) mit dem Ratenzähler (20) verbunden ist, um einen momentanen Wert der Anzahl von gezählten Paketen des entsprechenden rückwärtsgerichteten Stroms (18) zu speichern.

10. Schalter nach Anspruch 7, wobei die Verarbeitungseinheit (14), die Lernanforderungs-Rangzuweisungseinheit (12) und die Planungseinheit (13) in einem Netzwerkprozessor (7) implementiert werden.

11. Computernetzwerk, insbesondere ein Ethernet-Netzwerk (11), mit mindestens einem Schalter (10) nach Anspruch 7.

12. Computerprogramm-Produkt mit Codemitteln zum Implementieren aller Schritte des Verfahrens nach Anspruch 1.

## Revendications

1. Procédé d'apprentissage d'adresses de contrôle d'accès au support, MAC, comprenant : l'attribution de priorités (Prio0 à Prio3) à des demandes d'apprentissage (4) pour apprendre des adresses MAC de flux avant (1) en fonction des débits de flux arrière correspondants (18), les priorités les plus élevées (Prio0 à Prio3) étant attribuées aux demandes d'apprentissage (4) des flux avant (1) dont les flux arrière correspondants (4) ont des débits plus élevés, et la planification du traitement des demandes d'apprentissage (4) en fonction des priorités attribuées (Prio0 à Prio3).

2. Procédé selon la revendication 1, comprenant en outre : l'attribution de priorités définies par l'utilisateur (Prio0 à Prio3) aux demandes d'apprentissage (4) des flux avant (1), les priorités définies par l'utilisateur (Prio0 à Prio3) étant de préférence choisies parmi un ensemble prédéfini de valeurs discrètes.

3. Procédé selon la revendication 1, comprenant en outre : pour l'attribution automatique des priorités (Prio0 à Prio3) aux demandes d'apprentissage (4), la détermination du débit d'au moins un flux arrière correspondant (18), de préférence en comptant le nombre de paquets du flux arrière (18) pour lequel une consultation de l'adresse MAC est effectuée.

4. Procédé selon la revendication 3, dans lequel la zone adresse MAC (15) du flux avant (1) est liée à un compteur de débit (20) pour stocker une valeur courante du nombre de paquets comptés du flux arrière correspondant (18).

5. Procédé selon la revendication 4, dans lequel avant de recompter le nombre de paquets, la valeur courante du compteur de débit (20) est transférée à un registre (22), le recomptage étant de préférence effectué lors de la mise à jour des compteurs de vieillissement (17) de la table d'adresses MAC (5).

6. Procédé selon la revendication 1, dans lequel les demandes d'apprentissage (4) ayant une priorité (Prio0) inférieure à une priorité de seuil prédéfinie (Prio1) sont écartées.

7. Commutateur, en particulier commutateur Ethernet (10), comprenant :
une unité centrale (14) pour traiter les demandes d'apprentissage d'adresses (SMAC) de contrôle d'accès au support, MAC, de flux avant (1), **caractérisé par** une unité de classement des demandes d'apprentissage (12) pour attribuer des priorités (Prio0 à Prio3) aux demandes d'apprentissage (4) des flux avant (1) en fonction des débits des flux arrière correspondants (18), les priorités les plus élevées (Prio0 à Prio3) étant attribuées aux demandes d'apprentissage (4) des flux avant (1) dont les flux arrière correspondants (18) ont des débits plus élevés, et une unité de planification (13) pour planifier le traitement des demandes d'apprentissage (4) dans l'unité centrale (14) en fonction des priorités attribuées (Prio0 à Prio3).

8. Commutateur selon la revendication 7, comprenant en outre :
une unité de détermination du débit (21) pour déterminer un débit d'au moins un flux arrière correspondant (18), de préférence en comptant le nombre de paquets du flux arrière (18) pour lequel une consultation d'adresse MAC est effectuée.

9. Commutateur selon la revendication 8, comprenant en outre une unité de stockage (5a) pour stocker une table d'adresses MAC (5), au moins une adresse MAC stockée d'un flux avant (1) étant liée à un compteur de débit (20) pour stocker une valeur courante du nombre de paquets comptés du flux arrière correspondant (18).

10. Commutateur selon la revendication 7, dans lequel l'unité centrale (14), l'unité de classement des demandes d'apprentissage (12) et l'unité de planification (13) sont mises en oeuvre dans un processeur de réseau (7).

11. Réseau informatique, en particulier réseau Ethernet (11), comprenant au moins un commutateur (10) selon la revendication 7.

12. Produit de programme informatique comprenant des moyens de code pour mettre en oeuvre toutes les étapes du procédé selon la revendication 1.
